# EUROPEAN PATENT APPLICATION

(11) **EP 4 624 435 A2**
(43) Date of publication of application: **01.10.2025**
(21) Application number: 25196055.5
(22) Date of filing: 01.09.2021
(51) Int. Cl.: C04B 2/12

(54) **PROCESS FOR DECARBONATING CARBONATED MATERIALS AND DEVICE THEREFOR**

(30) Priority: 03.09.2020 EP 20194380; 13.04.2021 WO PCT/EP2021/059593
(62) Divisional of application: 21769470.2
(71) Applicant: Carmeuse Technologies, 1348 Ottignies-Louvain-la-Neuve (BE); Consejo Superior de Investigaciones Científicas (CSIC), 28006 Madrid (ES)
(72) Inventor: ROBIN, Charles, 5340 FAULX-LES-TOMBES (BE); CAMBIER, Pierre-Olivier, 1320 HAMME-MILLE (BE); GUTHRIE, Steven Bruce, 5020 MALONNE (BE); ABANADES GARCIA, Juan Carlos, 33316 Selorio-Villaviciosa (ES)
(74) Representative: AWA Benelux

(57) **Abstract**

The present invention relates to a process for the decarbonation of limestone, dolomite or other carbonated materials, comprising the following steps:
- heating particles of carbonated materials (6) in a reactor (8) of a first circuit (2) to obtain decarbonated particles (16);
- conveying particles of carbonated materials (6) by a first entraining gas (4) in the first circuit (2) for preheating, said gas (4) comprising said carbon dioxide, said gas composition being substantially free of nitrogen;
- separating the carbonated particles (6) from a first entraining gas (4) flow ;
- transferring the decarbonated particles (16) to a cooling section (22) of a second circuit (12) comprising a second entraining gas (14) in which the conveyed decarbonated particles (16) release a portion of their thermal energy;
- separating the decarbonated particles (16) from a second entraining gas (14) flow;
wherein said second entraining gas (14) is substantially free of carbon dioxide, and the device thereof.

## Description

### Field of the Invention

The invention relates to a process for decarbonating carbonated materials such as limestone or dolomite, as well as to the associated device.

### Background and Prior Art

Traditionally, the decarbonation of limestone or dolomite is performed through calcination in a kiln.

The traditional kilns reject significant amounts of CO₂ via the decarbonation of the minerals and the combustion of fuels. In the search for cleaner industrial plants and cost saving in emerging markets that penalize carbon emissions, efforts have been made to reduce the CO₂ footprint of kilns by introducing heat-regeneration measures. For instance, the air that is heated from product cooling is blown into the burning zone of the kiln and used for the combustion of the fuel. These improvements are required to achieve an efficiency with a specific heat input of <5.2GJ/Tonne product. However, the CO₂ generated in the known kilns is still emitted to the atmosphere as it cannot be used or sequestered because it is too diluted in the flue gas.

To overcome these drawbacks, the skilled person has come along with the concept of a calciner as that disclosed in US 4,707,350, where limestone particles are entrained/conveyed by CO₂ gas in a close-loop circuit. The carbonated particulates are first preheated before they are fed into a reactor where the decarbonation takes place under high temperatures. This known process overcomes most of the known drawbacks. The decarbonation takes place in an atmosphere that is substantially free of nitrogen. The generated CO₂ can be used or sequestered. However, the extended residence time of decarbonated particles in a CO₂-rich atmosphere in a cooling zone positioned downstream from the decarbonation reactor causes recarbonation of the product (i.e. lime).

Patent EP 2230223 B1 discloses a kiln comprising chambers, where a first chamber is dedicated to the decarbonation with an atmosphere that is free of nitrogen and a second chamber dedicated to the cooling of the decarbonated particles in an atmosphere that is free of CO₂ in order to limit the exposure of the product (i.e. lime) to CO₂. This process further teaches a solution to recover energy. This kiln (a.k.a. shaft kiln) presents a static technology, where pebbles are stacked in the chambers.

The kiln of EP 2230223 B1 is conceived to be operated with pebbles, for which it is difficult in practice to have a proper sealing device without introducing a complex locking mechanism between both chambers. Moreover, this kiln does not offer the possibility to optimise the operation of limestone quarries. Indeed, the fines that are generated during the crushing operations required to produce the pebbles are generally hardly used in such a kiln. Finally, the maximal throughput is typically around 500 to 600 t/day and this level is comparatively low to reach scale economies.

Patent application EP 3221264 A1 teaches a process for producing a highly calcined and uniformly calcined product in a flash calciner, where the decarbonation fine carbonated materials takes place in a few seconds. However, this publication fails to disclose any measure on how to operate two separated circuits, namely a calcination and a cooling circuit, in which circulate two different entraining gases (one rich in CO₂ and the second free of CO₂) for conveying the particles of carbonated/decarbonated materials and fails to achieve the desired products of cooled pure CO₂ and decarbonated material from the carbonated material.

### Aims of the Invention

The invention aims to provide a solution to at least one drawback of the teaching provided by the prior art.

More specifically, the invention aims to provide a process and a device for simultaneously allowing a decarbonation with a high production throughput of a product (e.g. quicklime, dolime) with a high decarbonation grade while producing a CO₂ rich stream suitable for sequestration or use.

### Summary of the invention

For the above purpose, the invention is directed to a process for the decarbonation of limestone, dolomite or other carbonated materials, said process comprising the following steps:
- heating particles of carbonated materials in a reactor of a first circuit up to a temperature range in which (preferably most) carbon dioxide of the carbonated materials is released to obtain decarbonated particles comprising CaO and/or MgO;
- conveying particles of carbonated materials by a first entraining gas in the first circuit for preheating said carbonated materials, said entraining gas comprising said carbon dioxide, said gas composition being substantially free of nitrogen;
- separating the carbonated particles from a first entraining gas flow ;
- transferring the decarbonated particles to a cooling section of a second circuit comprising a second entraining gas in which the conveyed decarbonated particles release a portion of their thermal energy;
- separating the decarbonated particles from a second entraining gas flow;
wherein said second entraining gas is substantially free of carbon dioxide, and wherein the first and second circuits are separated by selective separation means allowing the passage of solids while substantially preventing the passage of the entraining gases.

According to specific embodiments of the invention, the process comprises one or more of the following technical features:
- a step of introducing the particles of carbonated materials in a pre-heating section of the first circuit so that said particles are pre-heated by the first entraining gas by means of a solid-gas heat exchange;
- a step of introducing the particles of carbonated materials in a heating section of the second circuit, the heating section being positioned downstream of the cooling section, so that the released heat from the decarbonated particles to the second entraining gas is used to heat the particles of carbonated materials by means of a solid-gas heat exchange, the heated particles being subsequently transferred to the reactor or upstream of the pre-heating section;
- a step of separating the particles of carbonated materials from a second entraining gas flow;
- a step of separating the particles of decarbonated materials from a first entraining gas flow;
- a step of recirculating at least a portion of the carbon dioxide released in the reactor in the first circuit, preferably recirculating said carbon dioxide to the reactor;
- a step of separating at least one constituent, in particular water, from at least one portion of the first entraining gas exiting the reactor;
- the carbon dioxide represents at least 50%, preferably at least 85% by volume of the dry composition of first entraining gas exiting the reactor;
- a step of recycling at least a portion of the heat of the second entraining gas, preferably exchanging heat from the second entraining gas to the first entraining gas, more preferably through a gas-gas heat exchanger positioned between the first circuit and the second circuit;
- a step of controlling a louver or a damper in either the first circuit or second circuit so that the absolute pressure difference across the selective separation means remains below a predefined value, preferably remains within a given pressure range.
- the reactor being a first reactor, said process comprising a step of extending decarbonation degree and/or adjusting the product reactivity, preferably extending the retention time of the particles in a second reactor;
- a step of burning at least a portion of the second entraining gas in a burner outside the reactor, said reactor comprising an externally-fired calciner;
- a step of using the thermal energy in flue gas from the externally-fired calciner to preheat at least a part of the carbonated material;
- wherein the step of separating the carbonated particles from a first entraining gas flow comprises a step of inertially separating the carbonated particles from the first entraining gas flow;
- wherein the step of separating the decarbonated particles from a second entraining gas flow comprises a step of inertially separating the decarbonated particles from the second entraining gas flow;
- wherein the step of separating the particles of carbonated materials from a second entraining gas flow comprises a step of inertially separating the particles of carbonated materials from the second entraining gas flow;
- wherein the step of separating the particles of decarbonated materials from a first entraining gas flow comprises a step of inertially separating the particles of decarbonated materials from the first entraining gas flow;
- wherein the particles of the carbonated minerals have a d90 less than 10 mm, preferably less than 6 mm, more preferably less than 4 mm.

The invention also relates to a device for the decarbonation of limestone, dolomite or other carbonated materials, for carrying out the process comprising:
- a first circuit in which a first entraining gas substantially free of nitrogen conveys particles of said carbonated mineral, said first circuit comprising a reactor in which said particles are heated to a temperature range in which carbon dioxide is released to obtain decarbonated particles comprising CaO and/or MgO;
- a second circuit in which a second entraining gas substantially free of carbon dioxide is circulated (flows), the second circuit comprising a cooling section in which the decarbonated particles transferred from the first circuit, release a portion of their thermal energy to the second entraining gas;
- at least one selective separation means connecting the first and second circuits arranged so as to allow the transfer of either the particles of carbonated materials or the decarbonated particles of said materials between the first circuit and the second circuit while substantially preventing the passage of gases, in particular a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve.

According to specific embodiments of the invention, the device comprises one or more of the following features:
- the cooling section of the second circuit comprising a first solid/gas suspension heat exchanger;
- the second circuit comprising a heating section positioned downstream from the cooling section of the second circuit , preferably said heating section comprising a solid/gas suspension heat exchanger;
- the first circuit comprising a pre-heating section, said pre-heating section comprising at least a first solid/gas suspension heat exchanger and/or a second solid/gas suspension exchanger, preferably said second solid/gas suspension exchanger being positioned downstream from said first solid/gas suspension heat exchanger;
- the first solid/gas suspension heat exchanger and/or the second solid/gas suspension exchanger of the first or second circuit comprising at least one separator, in particular an inertial separator, preferably a cyclone, the at least one separator comprising an inlet, an outlet and a return passage for collecting the separated particles;
- a first selective separation means connecting the first and the second circuit allowing the transfer of the decarbonated particles from the first circuit to the second circuit while substantially preventing the passage of gases, the first selective separation means being connected upstream of the inlet of the first suspension heat exchanger of the second circuit;
- the return passage of the first suspension heat exchanger of the first circuit being connected to an inlet of the reactor, preferably the return passage of the second suspension heat exchanger of the first circuit being connected upstream of the inlet of the first suspension heater of the first circuit, both suspension heat exchangers being connected in series;
- a second selective separation means connecting the first and the second circuit allowing the transfer of the carbonate particles from the second circuit to the first circuit while substantially preventing the passage of gases, wherein the return passage of the second solid/gas suspension heat exchanger of the second circuit is connected to the first circuit, preferably said selective separation means being connected to the reactor or upstream of an element of the first circuit, said element being the first solid/gas suspension heat exchanger or the second solid/gas suspension heat exchanger;
- a condenser to separate at least one constituent, in particular water from the first entraining gas, said condenser being positioned in the first circuit downstream of the reactor;
- the first circuit comprising a recycling passage for recycling at least a portion of the first entraining gas from a position downstream from the pre-heating section or the condenser to a position upstream of the reactor;
- the second circuit comprising a heat-recovery element, preferably said heat-recovery element being configured to exchange the heat accumulated in the second entraining gas to the first entraining gas at a section of the first circuit, more preferably said heat-recovery system being a heat exchanger positioned between the first circuit and the second circuit;
- the reactor comprising at least one of the following elements: electric heater, oxy-burner, an indirect calciner such as solid heat-carrier reactor, an externally-fired calciner, or electrically-heated calciner, or a combination thereof;
- the reactor comprising a fluidized bed reactor, an entraining bed reactor, a circulated fluidized bed or any combination thereof;
- the externally-fired calciner comprising an exhaust passage, said passage being connected to the second circuit, preferably upstream of the heating section;
- the externally-fired calciner comprising an intake passage, said passage being connected to the second circuit, preferably downstream from the heating section.

### Brief description of the figures

Preferred aspects of the invention will now be described in more detail with reference to the appended drawings, wherein same reference numerals illustrate same features.

### List of reference symbols

- 2: First circuit, calcination circuit
- 4: First entraining gas
- 6: Carbonated particles
- 8: Reactor/first reactor
- 12: Second circuit, cooling circuit
- 14: Second entraining gas
- 16: Decarbonated particles
- 20, 21: Selective separation means, sealing device
- 22: Cooling section of the second circuit
- 24: *(First)* solid/gas suspension heat exchanger of the **second circuit**
- 24.1: inlet of the *(first)* solid/gas suspension heat exchanger of the **second circuit**
- 24.2: outlet of the *(first)* solid/gas suspension heat exchanger of the **second circuit**
- 24.3: return of the *(first)* solid/gas suspension heat exchanger of the **second circuit**
- 32: Heating section of the **second circuit**
- 34: *(Second)* solid/gas suspension heat exchanger of the **second circuit**
- 34.1: inlet of the *(second)* solid/gas suspension heat exchanger of the **second circuit**
- 34.2: outlet of the *(second)* solid/gas suspension heat exchanger of the **second circuit**
- 34.3: return of the *(second)* solid/gas suspension heat exchanger of the **second circuit**
- 42: Pre-heating section of the **first circuit**
- 44: *(First)* solid/gas suspension heat exchanger of the **first circuit**
- 44.1: inlet of the *(first)* solid/gas suspension heat exchanger of the **first circuit**
- 44.2: outlet of the *(first)* solid/gas suspension heat exchanger of the **first circuit**
- 44.3: return of the *(first)* solid/gas suspension heat exchanger of the **first circuit**
- 46: *(Second)* solid/gas suspension heat exchanger of the **first circuit**
- 46.1: inlet of the *(second)* solid/gas suspension heat exchanger of the **first circuit**
- 46.2: outlet of the *(second)* solid/gas suspension heat exchanger of the **first circuit**
- 46.3: return of the *(second)* solid/gas suspension heat exchanger of the **first circuit**
- 50: Condenser
- 60: gas-gas heat exchanger
- 82: oxy-burner
- 84: Externally-fired calciner
- 86: Second reactor
- 90: Recycling passage
- 100: Exhaust passage
- 110: Intake passage

### Description of Preferred Embodiments of the Invention

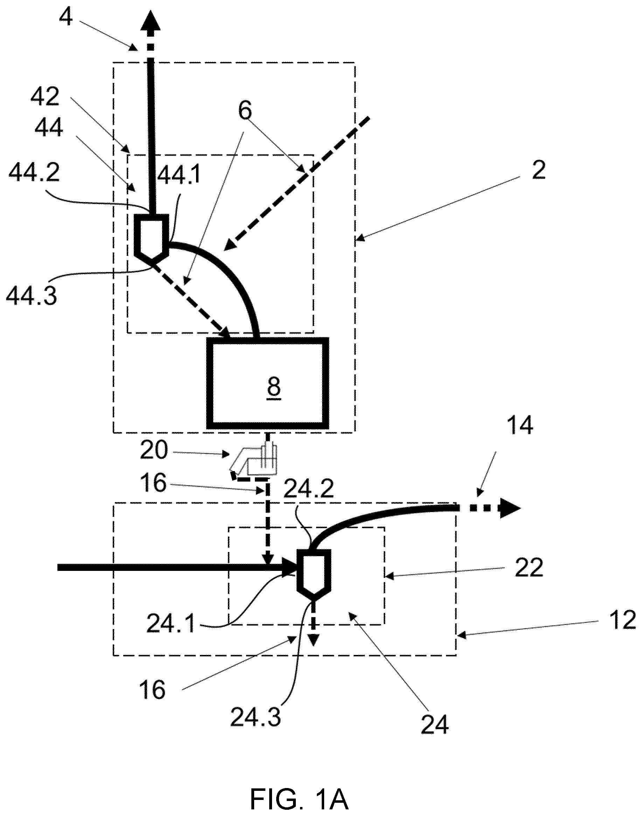

Fig. 1A shows a device for the decarbonation of limestone, dolomite or other carbonated materials comprising the key features of the present invention. All other embodiments disclosed below are derived from the core concept disclosed in Fig. 1A. In Fig. 1A, the carbonated materials 6, such as limestone or dolomite in form of screened or ground particles, are fed into a first circuit 2, in which a first gas 4 circulates, said gas 4 being the exhaust gas of reactor 8. The particles of carbonated materials 6 are entrained/conveyed to the reactor 8 where the decarbonation takes place under high temperatures. The first gas 4 is selected substantially free of nitrogen. For instance, the nitrogen represents less than 10% vol. in particular less than 5% vol. of the first gas composition. This facilitates the final purification of the exhaust gas 4 into a suitable purity for downstream CO₂ use or sequestration. Furthermore, when the decarbonation is performed in an atmosphere substantially free of nitrogen, a negligible amount of NOx is generated. Indeed, NOx is likely to be formed under heat and in the presence of oxygen and nitrogen, which are the two main constituents of air. The first circuit 2 is therefore sealed from the ambient air. The first gas 4 is used to preheat the particles of carbonated materials 6. The first gas 4 mainly results from the CO₂ being released during the decarbonation process in the reactor 8 and optionally from the gas resulting from the combustion coupled to the decarbonation process. It should be noted that the first gas 4 transports the particles of carbonated materials 6 away from the reactor 8, which is a gas source for the first gas 4 stream. In order to feed the reactor 8 with the particles of carbonated materials 6, a solid/gas separation, preferably an inertial separation is performed in separator 44 such as a cyclone. Separator 44 helps not only to separate the solid materials from the entraining gas, but also enhances heat exchanges. Indeed, the solid particles are efficiently heated by the entraining gas before being separated thanks to a proper distribution of the solid particles in the gas stream, a vast surface area of the solid gets in contact with the gas. Consequently, the solid and gas materials reach similar temperature in a very short time (typically a fraction of seconds). This type of heat exchanger is called solid-gas heat exchanger or suspension heat exchanger 44, and can typically contain several gas-solid separators to approach a counter current contact between the first gas 4 and the carbonated particles 6. Once the carbonated particles 6 are decarbonated in the reactor 8, the decarbonated particles 16 are transferred to a second circuit 12, via a selective separation means 20 connecting the first and second circuits, 2 and 12. The selective separation means 20 (sealing device) is arranged so as to allow the transfer of the particles of decarbonated materials 16 from the first circuit 2 to the second circuit 12 while substantially preventing the passage of gases 4 to circuit 12 and gases 14 to circuit 2. This selective separation means 20 can be a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve. A second gas 14 substantially free of CO₂ circulates in the second circuit 12, in order to avoid that the particles of decarbonated materials 16 react with the CO₂ present in the first circuit. The CO₂ in the second gas 14 represents less than 5% vol.. The second gas 14 is not only used to transport the particles of decarbonated materials 16 but also to cool them in a dedicated solid-gas heat exchanger or suspension heat exchanger 24 containing gas-solid separators such as a cyclone or series of cyclones.

Moreover, even if the quantity of CO₂ in the fumes from a lime/dolomite reactor is significant, the process and the device of the present invention ensure that any gas mixture (second gas 14) used to cool lime/dolomite through direct contact with the CaO/MgO is substantially free of CO₂. This gas mixture (second gas 14) would therefore avoid any reconversion back to CaCO₃/MgCO₃. Hence, the present invention allows to bring the residual amount of carbonate in the limestone/dolomite to an acceptable level (e.g. less than 5% in weight).

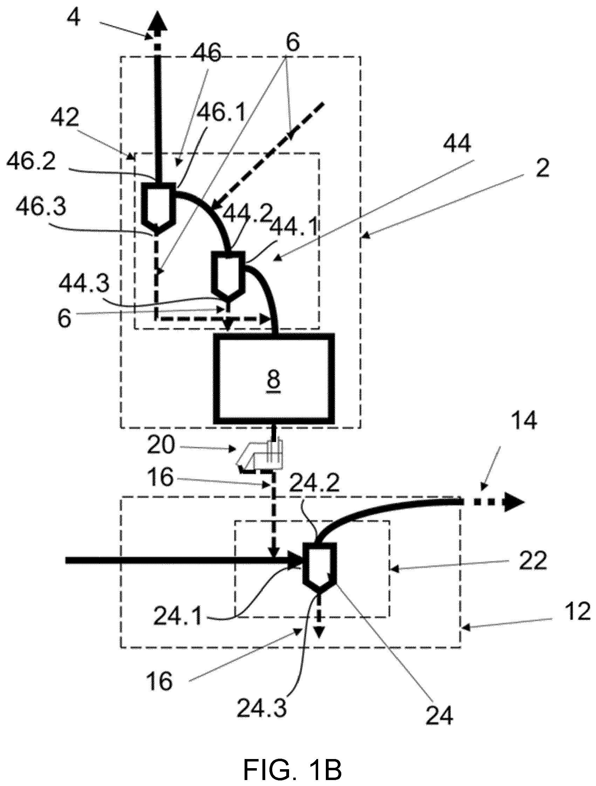

Fig. 1B shows a variant of the first embodiment where the preheater comprises more than one cyclone, in particular two cyclones 44, 46. Even a higher number of cyclones (3 to 5) can be economically justified, to ensure a more effective preheating of the carbonated material 6 by exploiting the counter current gas-solid contact mode achieved in similar suspension preheaters set-ups described in the state of the art.

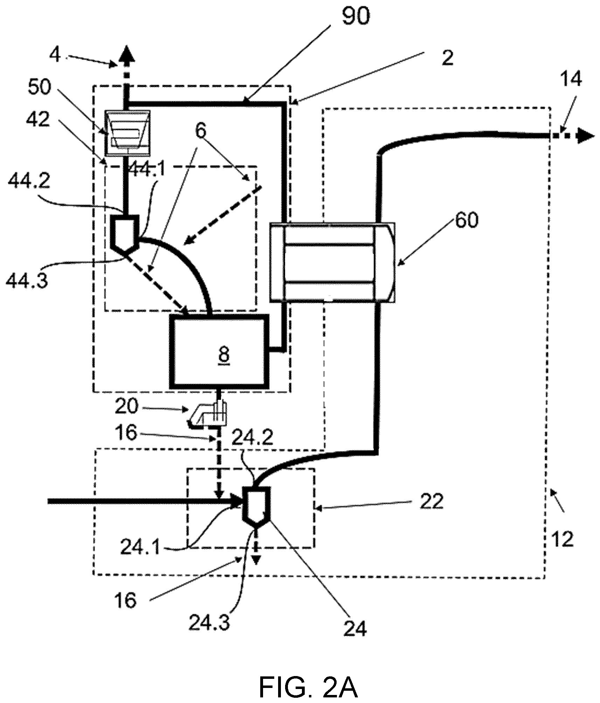

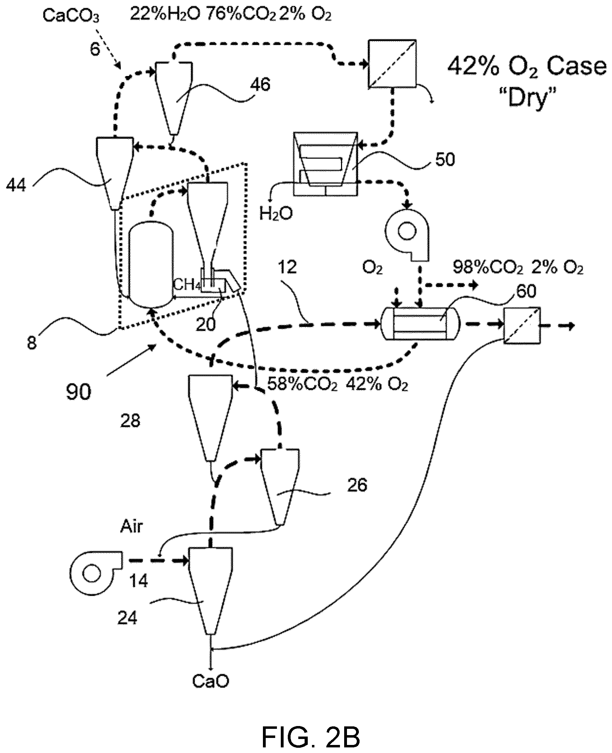

Fig. 2A and 2B show a second embodiment comprising two gas circuits, namely the first 2 and the second 12 circuit, wherein the circuits 2, 12 are kept separated with a single sealing device 20 (a selective separation means, in particular a loop seal). Fig. 2A represents the second embodiment in a simplified form similar to that of Fig. 2B in order to facilitate its understanding. In the second embodiment, the entirety of the gas resulting from the calcination (first gas 4 leaving the reactor 8) can be processed through an evaporative condenser 50, removing H₂O, allowing to reach a high level of CO₂ (e.g. CO₂>85% dry vol.). Part of the dry gas 4 abandoning the evaporative condenser 50 is removed from the first circuit 2 as dry first gas 4, to be conditioned for carbon sequestration (CCS) or carbon utilization (CCU), while the rest is recirculated back into the first circuit 2 via a recycling passage 90. A source of relatively pure O₂ is either mixed with the recirculated first gas 4 or is introduced in the reactor 8 close to the fuel injection area(s). The quantities of O₂ and fuels injected are adjusted to ensure that the waste heat in the gases after combustion and calcination is just sufficient to adequately preheat the incoming carbonated materials 6 while also maintaining a gas exit temperature just high enough to avoid H₂O condensation, which avoids fouling of the dust filter. The recirculated calcination gas or the mixture of recirculated calcination gas and pure O₂ is then preheated in a gas-to-gas heat exchanger 60 with the energy from the cooling circuit (second circuit 12) gas reclaimed from the finished product cooling (i.e. cooling of particles of decarbonated materials 16). The preheated recirculated gas is then directed back into the calcination zone (reactor 8) for combustion of a suitable fuel stream entering the reactor 8.

Preferably, as indicated in the example of Figure 2B, O₂ could be mixed at a concentration of (about) 42% vol. with the recirculated calcination gases to achieve this optimal flow rate of the gases leaving the reactor 8 and therefore providing just enough energy for preheating the carbonated material 6. Typical operating conditions are the followings:
- Fuel is CH₄;
- O₂ is mixed with the recirculated gas;
- The O₂ content of the gases leaving the reactor is controlled to (about) 1.5%;
- The energy input is set to achieve a product residual CO₂ of (about) 1%;
- The carbonated materials are preheated with the waste energy in the calcination gases to (about) 800°C;
- Ambient temperature is (about) 25°C;
- Product temperature leaving the cooling circuit is (about) 100°C;
- Cooling circuit gas is ambient air at a flow of (about) 0.70 Nm³•air/kg•product;
- The false air content is (about) 0.0%;
- Heat input needed is (about) 3.6GJ/Tonne•product;
- Temperature of calcination gases leaving carbonated material preheating section is (about) 116°C;
- Wet calcination gas composition is (about) 21.9% vol. H₂O, (about) 76.6% vol. CO₂, (about) 1.5% vol. O₂;
- Dry calcination gas composition is (about) 98.1% dry vol. CO₂ and (about) 1.9% dry vol. O₂.

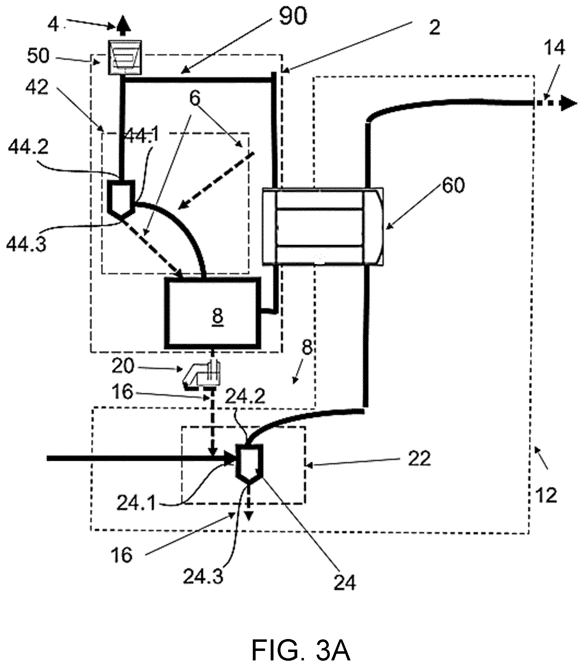

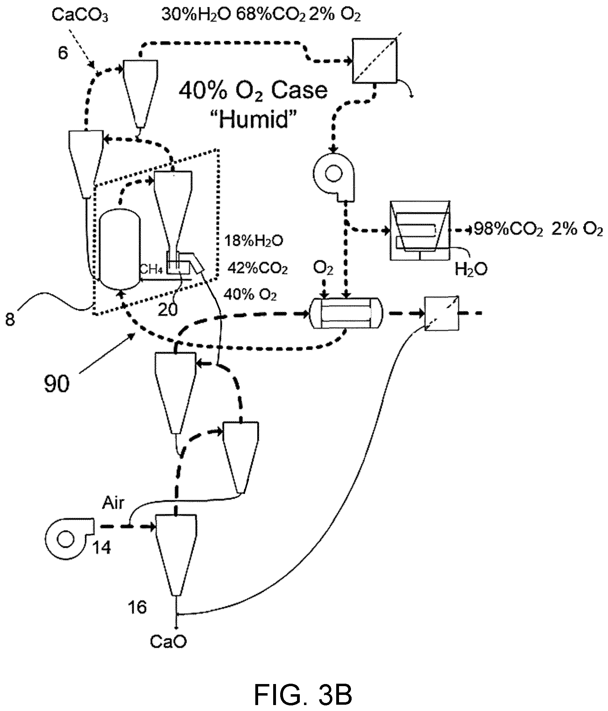

Fig.3A and 3B show a third embodiment of the present invention. Fig. 3A represents the third embodiment in a simplified form similar to that of Fig. 3B in order to facilitate its understanding. The third embodiment differs from the second embodiment in that moisture-laden calcination gas (first gas 4) is recirculated (stream 90) back into the reactor 8 and in that only the removed, first gas 4, is dried. This results in a higher moisture content in the calcination zone of the reactor 8 which lowers the partial pressure of CO₂, thereby aiding the liberation of CO₂ from the carbonated material 6 in reactor 8. This can slightly lower the peak temperature needed in the calciner as well as possibly influence the water reactivity (T₆₀) of the product (e.g. lime).

Preferably, the operating condition for the third embodiment are the following:
- O₂ should be mixed at a concentration of (about) 40% vol. with the recirculated calcination gases;
- Heat input needed remains at (about) 3.6GJ/Tonne•product;
- Temperature of calcination gases leaving carbonated material preheating section is (about) 114°C;
- Wet calcination gas composition is (about) 30.6%vol. H₂O, (about) 67.9% vol. CO₂, (about) 1.5% vol. O₂;
- Dry calcination gas composition is (about) 97.8%dry vol. CO₂ and (about) 2.2% dry vol. O₂.

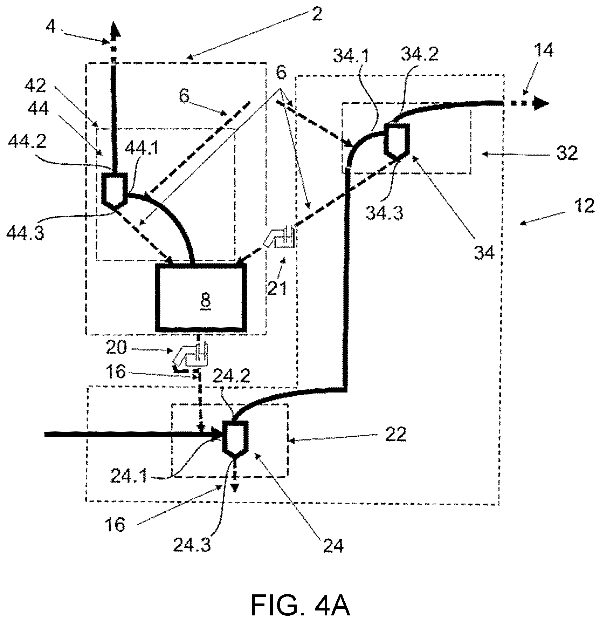

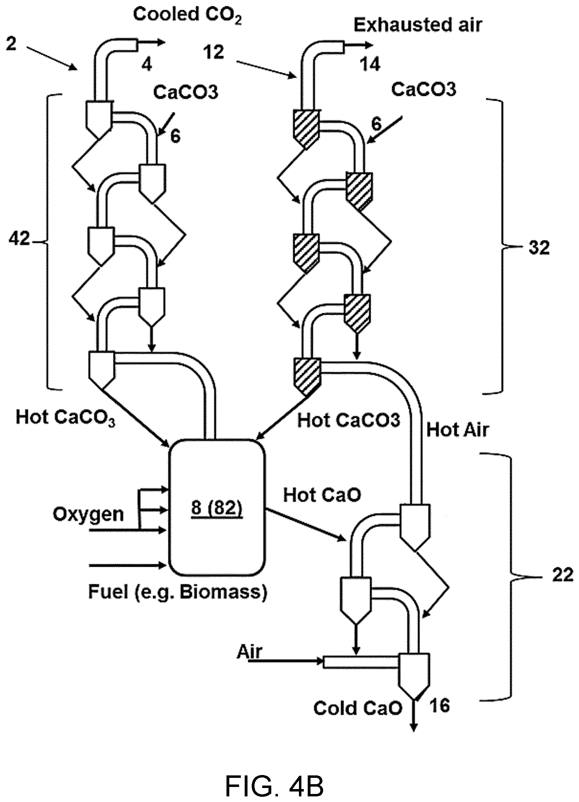

Fig.4A and 4B show a fourth embodiment of the present invention where the two gas circuits 2, 12 are kept separated by two sealing devices (i.e. selective separation means) 20, 21. Fig. 4A represents this embodiment in a simplified form similar to that of Fig. 4B in order to facilitate its understanding. In this embodiment, there is no recirculation of any gases back into the calcination circuit (first circuit 2). The fuel (not shown in Fig. 4A) is combusted with a gas containing nearly 100% O₂ vol. The calcination gas (first gas 4) used for CCS or CCU can be processed through an evaporative condenser (not shown) removing the H₂O resulting in a CO₂>85% dry vol.. Since the energy in the first gas 4 just after combustion and calcination is not sufficient to preheat 100% of the carbonated material 6, only a portion of the ambient temperature carbonated material 6 is conveyed into the calcination circuit (first circuit 2) for preheating. The maximal pre-heatable quantity of material 6 is conveyed into the calcination circuit to make sure that it is adequately preheated (about 800°C) before it enters the calcination zone (reactor 8, in particular an oxy-burner 82). The balance of carbonated material 6 is conveyed into a second heat exchanger (preferably a gas-solid suspension type 34) downstream of the hot product cooling circuit gas 14 exiting the product cooling heat exchanger (cooling section 22). The hot cooling gas 14 accomplishes the preheating of this portion of the carbonated material 6, which is then directly sent into the calcination zone (reactor 8, in particular an oxy-burner 82) of the calcination circuit (first circuit 2). A second sealing device (i.e. selective separation means) 21 can be provided to transfer the preheated carbonated material 6 leaving the carbonated material preheating heat exchanger 34 in the cooling circuit 12, directly into the calcination zone of the calcination circuit, bypassing the preheating heat exchanger 42 in the calcination circuit 2.

Keeping the same input values as the previous examples, the available preheating energy in the calcination gas (first gas 4) exiting the calcination zone (reactor 8) fired with 100% O₂ and fuel is (about) 1.3GJ/Tonne•product at (around) 900°C. The carbonated materials preheating requirements from ambient are (about) 1.8GJ/Tonne•product at (about) 800°C. It is expected that the energy from the cooling circuit (second circuit 12) available for preheating part of the carbonated material 6 could be (about) 0.7GJ/Tonne•product at (around) 750°C. This means that (around) 70% of the carbonated material 6 can be preheated with the waste energy leaving the calcination zone (reactor 8), while the balance can be preheated by the energy coming from the cooling circuit (second circuit 12) to (about) 650 to 700°C.

The advantage of this fourth embodiment is that it eliminates the relatively expensive and possibly maintenance-intensive gas-to-gas heat exchanger 60 of the previous two embodiments.

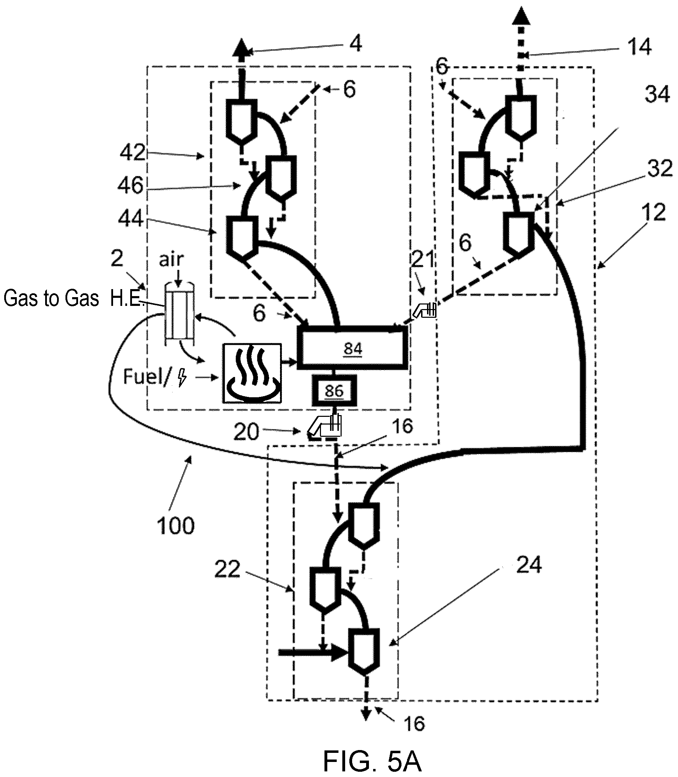

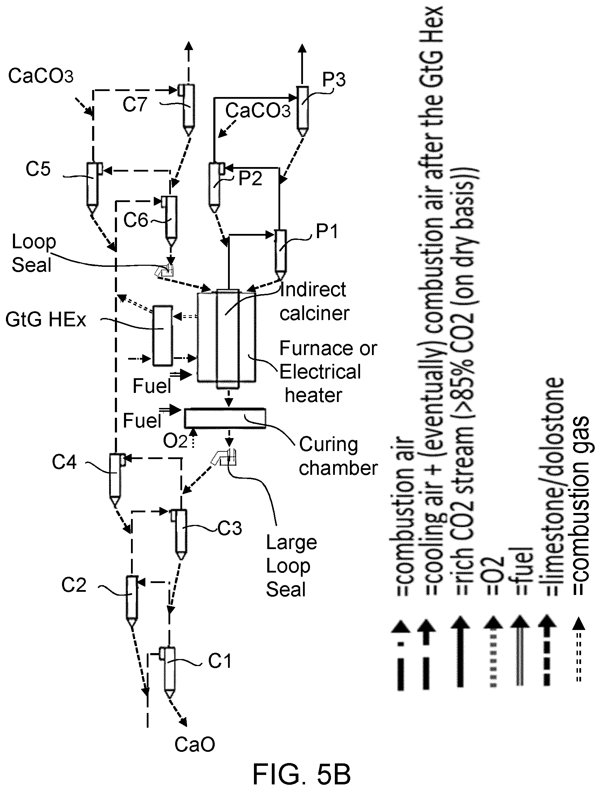

The fifth embodiment shown in Fig. 5A and 5B is similar to the fourth embodiment except that it further comprises two additional features. Fig. 5A represents the fifth embodiment in a simplified form similar to that of Fig. 5B in order to facilitate its understanding. The first feature relates to a supplementary (second) reactor 86 that could be equipped, if required, with an additional heating source, such as oxyfuel burners or electrical heating means. This second reactor 86 is used to achieve a residual CO₂ <2% in the product and to adjust the product reactivity. An additional benefit of the second reactor 86 is that the temperature and/or the residence time in the first calcination zone (first reactor 84) can be reduced compared to an embodiment without the second reactor 86. The second additional feature is the connection of the exhaust gas of the combustion chamber of an indirect calciner 84 to the second circuit 12 via an exhaust passage 100. The exhaust passage is connected downstream from the cooling section 22 of the second circuit 12. The mix of heated air from the cooling section 22 and combustion gas is then used to preheat carbonated materials 6. The preheated carbonated material 6 is then sent to the calcination zone (reactor 8) of the first circuit 2.

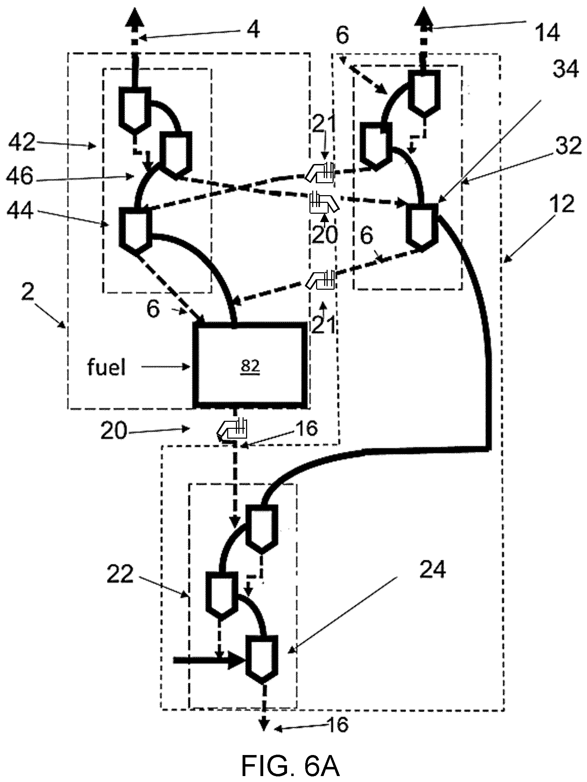

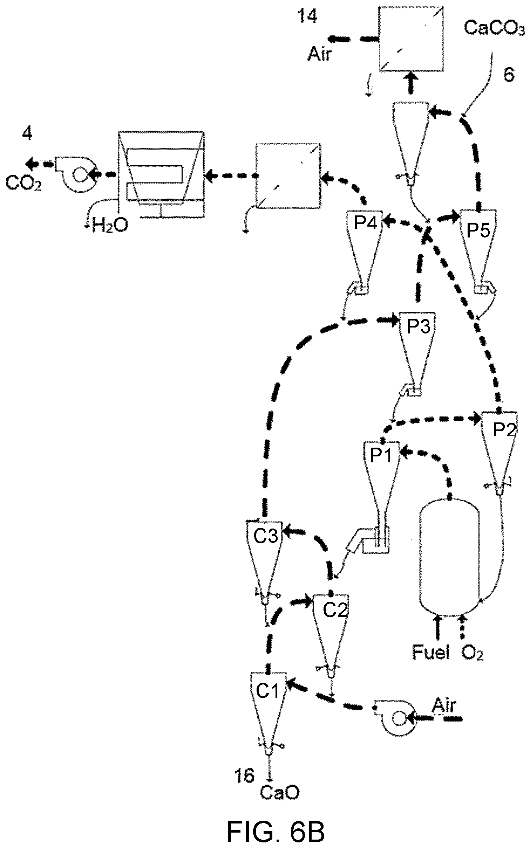

In a sixth embodiment as shown in Fig. 6A and 6B, the two gas circuits 2 and 12 are kept separated by possibly four or more sealing devices (i.e. selective separation means) 20, 21. This solution allows a stage heating (with a couple of steps) of the carbonated particles 6, in order to reduce the temperature differences during the heat exchanges. In this embodiment, there is no recirculation of any gases back into the calcination circuit. Fig. 6A represents the sixth embodiment in a simplified form similar to that of Fig. 6B in order to facilitate its understanding.

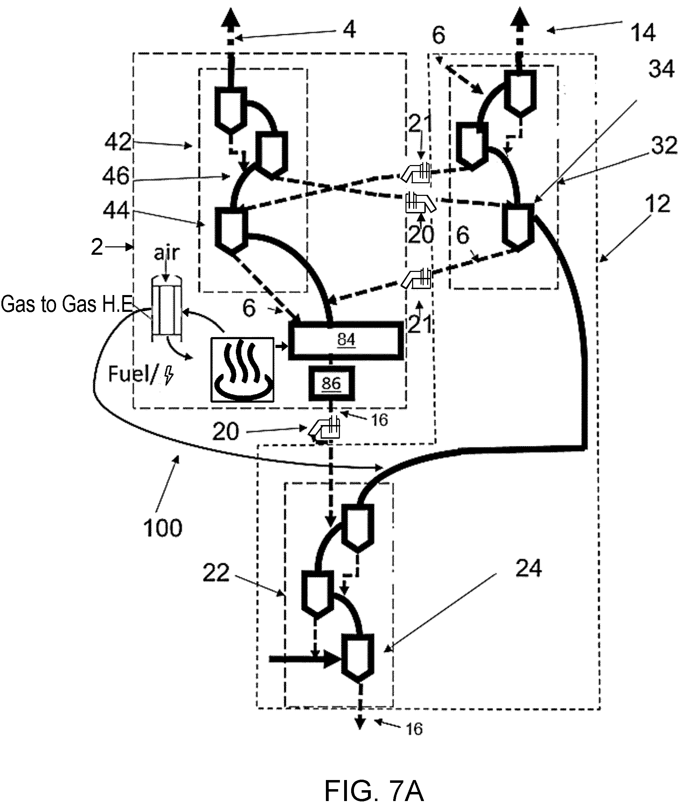

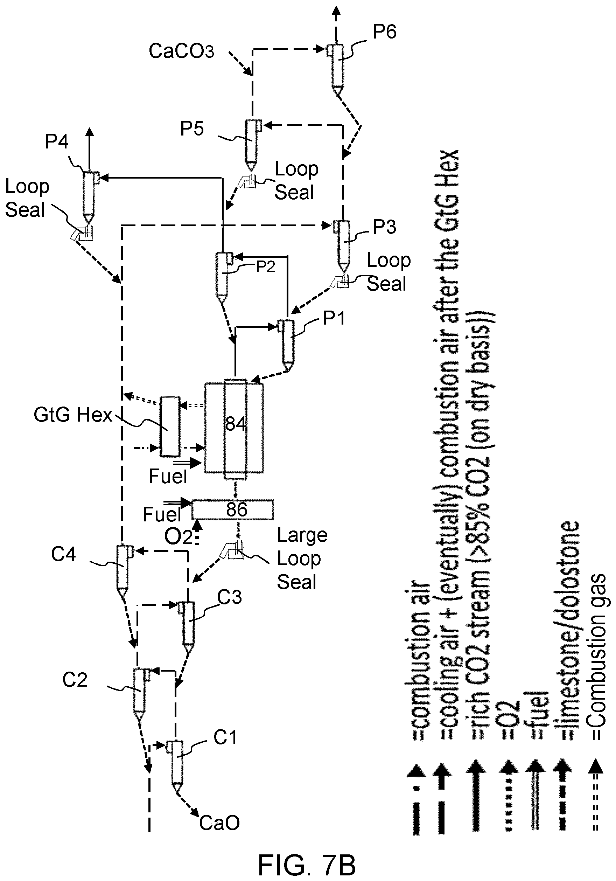

The seventh embodiment shown in Fig. 7A and 7B is identical to the sixth embodiment except that it further comprises two additional features of the fifth embodiment, which are adapted to the sixth embodiment, namely a second reactor 86 and an indirect calciner 84 (first reactor) combined with an exhaust passage 100.

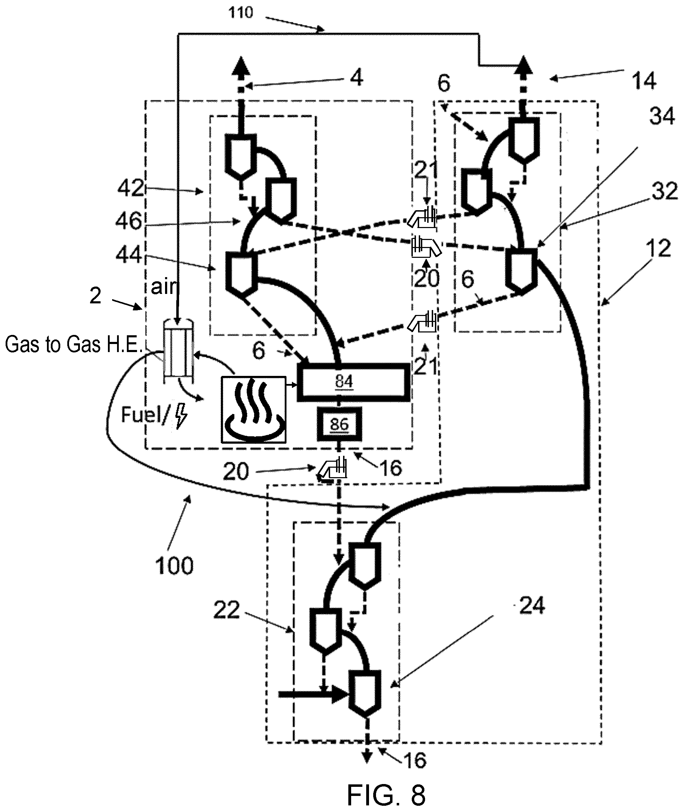

In another embodiment shown in Fig. 8, at least a part of the second entraining gas 14 (comprising air heated by the decarbonated particles 16 in the cooling section 22 of the second circuit 12), is used for the burner of the indirect calciner 84. Fig. 8 shows an intake passage 110 for transferring at least a portion of the second gas 14 to the burner. The intake passage 110 is connected downstream from the heating section 32 of the first circuit 2. Another position can be envisaged such as a position downstream from the cooling section 22 of the second circuit 12. Alternatively, the air for the burner can be heated via a heat exchanger exchanging heat from the second circuit 12 and the air for the burner (not shown). This way of reclaiming energy is a further possibility for achieving a specific heat input of <5.2GJ/Tonne•product.

The present invention describes measures for managing two separate entraining gas circuits 2, 12: one for carbonated material transport, preheating and calcination, and another for product transport, product cooling and possibly carbonated materials transport and preheating. The calcination circuit gases will be relatively free of N₂ comprising mostly CO₂ and H₂O while the cooling gases will be relatively free of CO₂. Optionally, as a post-processing step, dust is removed from both circuit's gases. Furthermore, the H₂O can be removed from the calcination gases with, for example, an evaporative condenser resulting in a relatively pure stream of CO₂>85% dry vol. If required by the end use of this CO₂ stream, other treatment steps can be included in the calcination circuit for the removal of other contaminants such as trace amounts of O₂, N₂, and other residual gases.

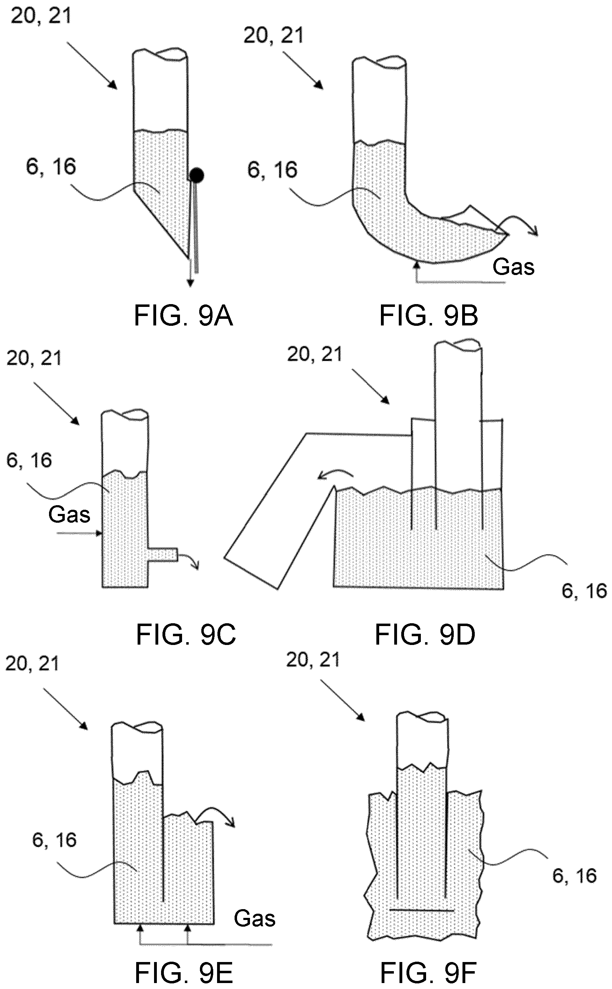

The selective separation means 20, 21 connecting the first 2 and second circuits 12 is arranged so as to allow the transfer of either the particles of carbonated materials 6 or the decarbonated particles 16 of said materials between the first circuit 2 and the second circuit 12 while substantially preventing the passage of gases 4, 14. The selective separation means 20, 21 is in particular a siphon element, a loop seal (see Fig. 9D), single or multiple flaps, table feeder, cellular wheel sluice, fluid seal-pot (see Fig. 9E), "Dollar" plate (see Fig. 9F), or any of the following valves: rotary valves, cone valve, J valve (see Fig. 9B), L valve (see Fig. 9C), trickle valve (see Fig. 9A) and flapper valve.

Since the interfaces between the calcination (first circuit 2) and the cooling circuits (second circuit 12) are very hot, this invention prioritizes the utilization of a non-mechanical sealing device (selective separation means 20, 21) with no moving part, such as a siphon element, a loop seal (see Fig. 9D), fluid seal-pot (see Fig. 9E), "Dollar" plate (see Fig. 9F), cone valve, J valve (see Fig. 9B) or L valve (see Fig. 9C). When a fluidising or aeration gas is needed to help the solid movement in the non-mechanical sealing device, steam is a preferred option as aeration gas. Alternatively, hydration is thermodynamically possible in the sealing device air, or O2 can be used for such aeration purposes. In this way of separation, the fine carbonated material 6 or product 16 provides a plugged seal keeping the gas streams reliably separated while preferring to avoid the use of a less reliable mechanical device in such very hot conditions. Pressure in the two circuits 2, 12 in the vicinity of the sealing devices can be equalized by adding a tail fan (if necessary) to the cooling circuit and/or by creating pressure drop with a throttle valve (e.g. louver, damper) in the calcination circuit to minimize the Δp across the seal. This helps to avoid CO₂ leaking into the cooling circuit 12 or N₂ leaking into the calcination circuit 2.

By limestone, dolomite or other carbonated materials is meant mainly the carbonated materials fitting the formula: aCaCO₃.bMgCO₃.cCaMg(CO₃)₂.xCaO.yMgO.zCa(OH)₂.tMg(OH)₂.ul, wherein I are impurities; x, y, z, t and u each being mass fractions ≥ 0 and ≤ 90%, a, b and c each being mass fractions ≥ 0 and ≤ 100%, with a + b + c ≥ 10% by weight, based on the total weight of said carbonated materials, preferably x, y, z, t and u each being mass fractions ≥ 0 and ≤ 50%, a, b and c each being mass fractions ≥ 0 and ≤ 100%, with a + b + c ≥ 50% by weight, based on the total weight of said carbonated materials; the particles of the carbonated minerals having a d90 less than 10 mm, preferably less than 6 mm, more preferably less than 4 mm.

By decarbonated materials is meant mainly materials fitting the formula aCaCO₃.bMgCO₃.cCaMg(CO₃)₂. xCaO.yMgO.zCa(OH)₂.tMg(OH)₂.ul, wherein I are impurities; a, b, c, z, t and u each being mass fractions ≥ 0 and ≤ 50%, x and y each being mass fractions ≥ 0 and ≤ 100%, with x + y ≥ 50% by weight, based on the total weight of said decarbonated materials;

By *"gas composition being substantially free of nitrogen"* is meant that the amount of nitrogen represents less than 10% vol., more preferably less than 5%, in particular less than 1% in volume (i.e. vol.) of the this gas composition.

*By "substantially free of carbon dioxide"* we understand that the amount of carbon dioxide represents less than 10% vol., more preferably less than 5%, in particular less than 1% in volume (i.e. vol.) of the this gas composition.

The calcination in the reactor 8, 82, in particular the externally-fired calciner 84 can be a flash calcination.

The heat released in the condenser 50 (e.g. see embodiments according to Fig. 2A, 2B, 3A, 3B) can be reused, for instance to heat the carbonated materials 6 before they are fed to the first circuit 2 (this option is not shown).

Embodiments as discussed above are defined by the following numbered clauses:
**Clause 1.** Process for the decarbonation of limestone, dolomite or other carbonated materials, said process comprising the following steps:
   - heating particles of carbonated materials (6) in a reactor (8) of a first circuit (2) up to a temperature range in which most carbon dioxide of the carbonated materials is released to obtain decarbonated particles (16) comprising CaO and/or MgO;
   - conveying particles of carbonated materials (6) by a first entraining gas (4) in the first circuit (2) for preheating said carbonated materials (6), said entraining gas (4) comprising said carbon dioxide, said gas composition being substantially free of nitrogen;
   - separating the carbonated particles (6) from a first entraining gas (4) flow ;
   - transferring the decarbonated particles (16) to a cooling section (22) of a second circuit (12) comprising a second entraining gas (14) in which the conveyed decarbonated particles (16) release a portion of their thermal energy;
   - separating the decarbonated particles (16) from a second entraining gas (14) flow;
   wherein said second entraining gas (14) is substantially free of carbon dioxide, and wherein the first (2) and second circuits (12) are separated by selective separation means (20, 21) allowing the passage of solids while substantially preventing the passage of the entraining gases (4, 14).
**Clause 2.** Process according to Clause 1, further comprising a step of introducing the particles of carbonated materials (6) in a pre-heating section (42) of the first circuit (2) so that said particles are pre-heated by the first entraining gas (4) by means of a solid-gas heat exchange (44).
**Clause 3.** Process according to any of the preceding clauses, further comprising a step of introducing the particles of carbonated materials (6) in a heating section (32) of the second circuit (12), the heating section (32) being positioned downstream of the cooling section (22), so that the released heat from the decarbonated particles (16) to the second entraining gas (14), is used to heat the particles of carbonated materials (6) by means of a solid-gas heat exchange (34), the heated particles (6) being subsequently transferred to the reactor (8) or upstream of the pre-heating section (42).
**Clause 4.** Process according to any of the preceding clauses, further comprising a step of separating the particles of carbonated materials (6) from a second entraining gas (14) flow.
**Clause 5.** Process according to any of the previous clauses, further comprising a step of recirculating at least a portion of the carbon dioxide released in the reactor (8) in the first circuit (2), preferably recirculating said carbon dioxide to the reactor (8).
**Clause 6.** Process according to any of the previous clauses, further comprising a step of separating at least one constituent, in particular water, from at least one portion of the first entraining gas (4) exiting the reactor (8).
**Clause 7.** Process according to any of the previous clauses, wherein the carbon dioxide represents at least 50%, preferably at least 85% by volume of the first entraining dry gas composition exiting the reactor (8).
**Clause 8.** Process according to any of the previous clauses, further comprising a step of recycling at least a portion of the heat of the second entraining gas (14), preferably exchanging heat from the second entraining gas (14) to the first entraining gas (4), more preferably through a gas-gas heat exchanger (60) positioned between the first circuit (2) and the second circuit (12).
**Clause 9.** Process according to any of the previous clauses, further comprising a step of controlling a louver or a damper in either the first circuit (2) or second circuit (12) so that the absolute pressure difference across the selective separation means (20) remains below a predefined value, preferably remains within a given pressure range.
**Clause 10.** Process according to any of the previous clauses, wherein the reactor (8) is a first reactor (8, 82, 84), said process further comprising a step of extending decarbonation degree and/or adjusting the product reactivity, preferably extending the retention time of the decarbonated particles (16) in a second reactor (86).
**Clause 11.** Process according to any of the previous clauses, further comprising a step of burning at least a portion of the second entraining gas (14) in a burner outside the reactor (8), said reactor (8) comprising an externally-fired calciner (84);
**Clause 12.** Process according to any of the previous clauses, further comprising a step of using the thermal energy in flue gas from the externally-fired calciner to preheat at least a part of the carbonated material.
**Clause 13.** Device for the decarbonation of limestone, dolomite or other carbonated materials, for carrying out the process according to any of the preceding clauses comprising:
   - a first circuit (2) in which a first entraining gas (4) substantially free of nitrogen conveys particles (6) of said carbonated mineral, said first circuit comprising a reactor (8) in which said particles (6) are heated to a temperature range in which carbon dioxide is released to obtain decarbonated particles comprising CaO and/or MgO;
   - a second circuit (12) in which a second entraining gas (14) substantially free of carbon dioxide is circulated, the second circuit (12) comprising a cooling section (22) in which the decarbonated particles (16) transferred from the first circuit (2), release a portion of their thermal energy to the second entraining gas (14);
   - at least one selective separation means (20, 21) connecting the first (2) and second circuits (12) arranged so as to allow the transfer of either, the particles of carbonated materials or the decarbonated particles (16) of said materials between the first circuit and the second circuit while substantially preventing the passage of gases (4, 14), in particular a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve.
**Clause 14.** Device according to Clause 13, wherein the second circuit (12) comprises a heating section (32) positioned downstream from the cooling section (22) of the second circuit (2), preferably said cooling section (22) and heating section (32) each comprising a gas suspension heat exchanger (24, 34).
**Clause 15.** Device according to any of Clauses 13 to 14, wherein the first circuit (2) comprises a pre-heating section (42), said pre-heating section comprising at least a first solid/gas suspension heat exchanger (44) and a second solid/gas suspension exchanger (46), preferably said second solid/gas suspension exchanger (46) being positioned downstream from said first solid/gas suspension heat exchanger (44).
**Clause 16.** Device according to any of Clauses 13 to 15, wherein a first selective separation means (20) connecting the first (2) and the second circuit (12) allowing the transfer of the decarbonated particles (16) from the first circuit (2) to the second circuit (12) while substantially preventing the passage of gases (4, 14), the first selective separation means (20) being connected upstream of an inlet (24.1) of the first suspension heat exchanger (24) of the second circuit (12).
**Clause 17.** Device according to any of Clauses 13 to 16, comprising a second selective separation means (21), connecting the first (2) and the second (12) circuit allowing the transfer of the carbonate particles (6) from the second circuit (12) to the first circuit (2) while substantially preventing the passage of gases (4, 14), wherein a return passage (34.3) of the second solid/gas suspension heat exchanger (34) of the second circuit (12) is connected to the first circuit (2), preferably said selective separation means (21) being connected to the reactor (8) or upstream of an element of first circuit (2), said element being the first solid/gas suspension heat exchanger (44) or the second solid/gas suspension heat exchanger (46) .
**Clause 18.** Device according to any of Clauses 13 to 17, wherein the reactor (8) comprises an externally-fired calciner (84), said externally-fired calciner (84) comprising an exhaust passage (100), said passage (100) being connected to the second circuit (12), preferably upstream of the heating section (32).
**Clause 19.** Process for the decarbonation of limestone, dolomite or other carbonated materials, said process comprising the following steps:
   - heating particles of carbonated materials (6) in a reactor (8) of a first circuit (2) up to a temperature range in which carbon dioxide of the carbonated materials is released to obtain decarbonated particles (16) comprising CaO and/or MgO;
   - conveying particles of carbonated materials (6) by a first entraining gas (4) in the first circuit (2) for preheating said carbonated materials (6), said entraining gas (4) comprising said carbon dioxide, said gas composition being substantially free of nitrogen;
   - separating the carbonated particles (6) from a first entraining gas (4) flow ;
   - transferring the decarbonated particles (16) to a cooling section (22) of a second circuit (12) comprising a second entraining gas (14) in which the conveyed decarbonated particles (16) release a portion of their thermal energy;
   - separating the decarbonated particles (16) from a second entraining gas (14) flow;
   wherein said second entraining gas (14) is substantially free of carbon dioxide, and wherein the first (2) and second circuits (12) are separated by selective separation means (20, 21) allowing the passage of solids while substantially preventing the passage of the entraining gases (4, 14).
**Clause 20.** Process according to Clause 19, further comprising a step of introducing the particles of carbonated materials (6) in a pre-heating section (42) of the first circuit (2) so that said particles are pre-heated by the first entraining gas (4) by means of a solid-gas heat exchange (44).
**Clause 21.** Process according to any of Clauses 19 to 20, further comprising a step of introducing the particles of carbonated materials (6) in a heating section (32) of the second circuit (12), the heating section (32) being positioned downstream of the cooling section (22), so that the released heat from the decarbonated particles (16) to the second entraining gas (14) is used to heat the particles of carbonated materials (6) by means of a solid-gas heat exchange (34), the heated particles (6) being subsequently transferred to the reactor (8) or upstream of the pre-heating section (42).
**Clause 22.** Process according to any of Clauses 19 to 21, further comprising a step of separating the particles of carbonated materials (6) from a second entraining gas (14) flow.
**Clause 23.** Process according to any of Clauses 19 to 22, further comprising a step of recirculating at least a portion of the carbon dioxide released in the reactor (8) in the first circuit (2), preferably recirculating said carbon dioxide to the reactor (8).
**Clause 24.** Process according to any of Clauses 19 to 23, further comprising a step of separating at least one constituent, in particular water, from at least one portion of the first entraining gas (4) exiting the reactor (8).
**Clause 25.** Process according to any of Clauses 19 to 24, wherein the carbon dioxide represents at least 50%, preferably at least 85% by volume of the first entraining dry gas composition exiting the reactor (8).
**Clause 26.** Process according to any of Clauses 19 to 25, further comprising a step of recycling at least a portion of the heat of the second entraining gas (14), preferably exchanging heat from the second entraining gas (14) to the first entraining gas (4), more preferably through a gas-gas heat exchanger (60) positioned between the first circuit (2) and the second circuit (12).
**Clause 27.** Process according to any of Clauses 19 to 26, further comprising a step of controlling a louver or a damper in either the first circuit (2) or second circuit (12) so that the absolute pressure difference across the selective separation means (20) remains below a predefined value, preferably remains within a given pressure range.
**Clause 28.** Process according to any of Clauses 19 to 27, wherein the reactor (8) is a first reactor (8, 82, 84), said process further comprising a step of extending decarbonation degree and/or adjusting the product reactivity, preferably extending the retention time of the decarbonated particles (16) in a second reactor (86).
**Clause 29**. Process according to any of Clauses 19 to 28, further comprising a step of burning at least a portion of the second entraining gas (14) in a burner outside the reactor (8), said reactor (8) comprising an externally-fired calciner (84);
**Clause 30.** Process according to any of Clauses 19 to 29, further comprising a step of using the thermal energy in flue gas from the externally-fired calciner to preheat at least a part of the carbonated material.
**Clause 31**. Process according to any of Clauses 19 to 30, further comprising a step of separating the particles (16) of decarbonated materials from a first entraining gas (4) flow.
**Clause 32.** Process according to any of Clauses 19 to 31, wherein the step of separating the carbonated particles (6) from a first entraining gas (4) flow comprises a step of inertially separating the carbonated particles (6) from the first entraining gas (4) flow.
**Clause 33.** Process according to any of Clauses 19 to 32, wherein the step of separating the decarbonated particles (16) from a second entraining gas (14) flow comprises a step of inertially separating the decarbonated particles (16) from the second entraining gas (14) flow.
**Clause 34.** Process according to any of Clauses 19 to 33, wherein the step of separating the particles (6) of carbonated materials from a second entraining gas (14) flow comprises a step of inertially separating the particles (6) of carbonated materials from the second entraining gas (14) flow.
**Clause 35.** Process according to any of Clauses 19 to 34, wherein the step of separating the particles (16) of decarbonated materials from a first entraining gas (4) flow comprises a step of inertially separating the particles (16) of decarbonated materials (16) from the first entraining gas (4) flow.
**Clause 36.** Process according to any of Clauses 19 to 35, wherein the particles of the carbonated (6) minerals have a d90 less than 10 mm, preferably less than 6 mm, more preferably less than 4 mm.
**Clause 37.** Device for the decarbonation of limestone, dolomite or other carbonated materials, for carrying out the process according to any of Clauses 19 to 36 comprising:
   - a first circuit (2) in which a first entraining gas (4) substantially free of nitrogen conveys particles (6) of said carbonated mineral, said first circuit comprising a reactor (8) in which said particles (6) are heated to a temperature range in which carbon dioxide is released to obtain decarbonated particles comprising CaO and/or MgO;
   - a second circuit (12) in which a second entraining gas (14) substantially free of carbon dioxide is circulated, the second circuit (12) comprising a cooling section (22) in which the decarbonated particles (16) transferred from the first circuit (2), release a portion of their thermal energy to the second entraining gas (14);
   - at least one selective separation means (20, 21) connecting the first (2) and second circuits (12) arranged so as to allow the transfer of either the particles of carbonated materials or the decarbonated particles (16) of said materials between the first circuit and the second circuit while substantially preventing the passage of gases (4, 14), in particular a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve.
**Clause 38.** Device according to Clause 37, wherein the second circuit (12) comprises a heating section (32) positioned downstream from the cooling section (22) of the second circuit (2), preferably said cooling section (22) and heating section (32) each comprising a solid/gas suspension heat exchanger (24, 34).
**Clause 39.** Device according to any of Clauses 37 to 38, wherein the first circuit (2) comprises a pre-heating section (42), said pre-heating section comprising at least a first solid/gas suspension heat exchanger (44) and/or a second solid/gas suspension exchanger (46), preferably said second solid/gas suspension exchanger (46) being positioned downstream from said first solid/gas suspension heat exchanger (44).
**Clause 40.** Device according to any of Clauses 37 to 39, wherein a first selective separation means (20) connecting the first (2) and the second circuit (12) allowing the transfer of the decarbonated particles (16) from the first circuit (2) to the second circuit (12) while substantially preventing the passage of gases (4, 14), the first selective separation means (20) being connected upstream of an inlet (24.1) of the first suspension heat exchanger (24) of the second circuit (12).
**Clause 41.** Device according to any of Clauses 37 to 40, comprising a second selective separation means (21), connecting the first (2) and the second (12) circuit allowing the transfer of the carbonate particles (6) from the second circuit (12) to the first circuit (2) while substantially preventing the passage of gases (4, 14), wherein a return passage (34.3) of the second solid/gas suspension heat exchanger (34) of the second circuit (12) is connected to the first circuit (2), preferably said selective separation means (21) being connected to the reactor (8) or upstream of an element of first circuit (2), said element being the first solid/gas suspension heat exchanger (44) or the second solid/gas suspension heat exchanger (46) .
**Clause 42.** Device according to any of Clauses 37 to 41, wherein the reactor (8) comprises an externally-fired calciner (84), said externally-fired calciner (84) comprising an exhaust passage (100), said passage (100) being connected to the second circuit (12), preferably upstream of the heating section (32).
**Clause 43.** Device according to any of Clauses 37 to 42, wherein the first solid/gas suspension heat exchanger (44) and/or the second solid/gas suspension exchanger (46) of the first circuit (2) comprise at least one separator, in particular a cyclone, the at least one separator comprising an inlet (44.1, 46.1), an outlet (44.2, 46.2) and a return passage (44.3, 46.3) for collecting the separated particles (6).
**Clause 44.** Device according to any of Clauses 37 to 43, wherein the solid/gas suspension heat exchanger (24) of the cooling section (22) of the second circuit (12) and/or the solid/gas suspension exchanger (34) of the heating section (32) of the second circuit (12) comprise at least one separator, in particular an inertial separator, preferably a cyclone, the at least one separator comprising an inlet (24.1, 34.1), an outlet (24.2, 34.2) and a return passage (24.3, 34.4) for collecting the separated particles (16, 6).
**Clause 45.** Device according to any of Clauses 37 to 44, comprising a condenser (50) to separate at least one constituent, in particular water from the first entraining gas (4), said condenser (50) being positioned in the first circuit (2) downstream of the reactor (8).
**Clause 46.** Device according to any of Clauses 37 to 45, wherein the first circuit (2) comprises a recycling passage (90) for recycling at least a portion of the first entraining gas (4) from a position downstream from the pre-heating section (32) or the condenser (50) to a position upstream of the reactor (8).
**Clause 47.** Device according to any of Clauses 37 to 46, wherein the second circuit (12) comprises a heat-recovery element (60), preferably said heat-recovery element being configured to exchange the heat accumulated in the second entraining gas (14) to the first entraining gas (4) at a section of the first circuit (2), more preferably said heat-recovery system (60) being a heat exchanger (60) positioned between the first (2) circuit and the second (12) circuit.
**Clause 48.** Device according to any of Clauses 37 to 47, wherein the reactor (8) comprises at least one of the following elements: electric heater, oxy-burner, an indirect calciner such as solid heat-carrier reactor, an externally-fired calciner (84), or electrically-heated calciner, or a combination thereof.
**Clause 49.** Device according to any of Clauses 37 to 48, wherein the reactor (8) comprises a fluidized bed reactor, an entraining bed reactor, a circulated fluidized bed or any combination thereof.
**Clause 50.** Device according to any of Clauses 37 to 49, wherein the externally-fired calciner (84) comprises an intake passage (110), said passage (110) being connected to the second circuit (12), preferably downstream from the heating section (32).

Although the present invention has been described and illustrated in detail, it is understood that the same is by way of illustration and example only and is not to be taken by way of limitation, the scope of the present invention being limited only by the terms of the appended claims.

## Claims

1. Device for the decarbonation of limestone, dolomite or other carbonated materials, said device comprising:
- a first circuit (2) in which a first entraining gas (4) substantially free of nitrogen conveys particles (6) of said carbonated mineral, said first circuit comprising a reactor (8) in which said particles (6) are heated to a temperature range in which carbon dioxide is released to obtain decarbonated particles comprising CaO and/or MgO;
- a second circuit (12) in which a second entraining gas (14) substantially free of carbon dioxide is circulated, the second circuit (12) comprising a cooling section (22) in which the decarbonated particles (16) transferred from the first circuit (2), release a portion of their thermal energy to the second entraining gas (14);
- at least one selective separation means (20, 21) connecting the first (2) and second circuits (12) arranged so as to allow the transfer of either the particles of carbonated materials or the decarbonated particles (16) of said materials between the first circuit and the second circuit while substantially preventing the passage of gases (4, 14), in particular a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve.

2. Device according to Claim 1, wherein the second circuit (12) comprises a heating section (32) positioned downstream from the cooling section (22) of the second circuit (2), preferably said cooling section (22) and heating section (32) each comprising a solid/gas suspension heat exchanger (24, 34).

3. Device according to any of the preceding claims, wherein the first circuit (2) comprises a pre-heating section (42), said pre-heating section comprising at least a first solid/gas suspension heat exchanger (44) and/or a second solid/gas suspension exchanger (46), preferably said second solid/gas suspension exchanger (46) being positioned downstream from said first solid/gas suspension heat exchanger (44).

4. Device according to any of the preceding claims, wherein a first selective separation means (20) connecting the first (2) and the second circuit (12) allowing the transfer of the decarbonated particles (16) from the first circuit (2) to the second circuit (12) while substantially preventing the passage of gases (4, 14), the first selective separation means (20) being connected upstream of an inlet (24.1) of the first suspension heat exchanger (24) of the second circuit (12).

5. Device according to any of the preceding claims, comprising a second selective separation means (21), connecting the first (2) and the second (12) circuit allowing the transfer of the carbonate particles (6) from the second circuit (12) to the first circuit (2) while substantially preventing the passage of gases (4, 14), wherein a return passage (34.3) of the second solid/gas suspension heat exchanger (34) of the second circuit (12) is connected to the first circuit (2), preferably said selective separation means (21) being connected to the reactor (8) or upstream of an element of first circuit (2), said element being the first solid/gas suspension heat exchanger (44) or the second solid/gas suspension heat exchanger (46) .

6. Device according to any of the preceding claims, wherein the reactor (8) comprises an externally-fired calciner (84), said externally-fired calciner (84) comprising an exhaust passage (100), said passage (100) being connected to the second circuit (12), preferably upstream of the heating section (32).

7. Device according to any of the preceding claims, wherein the first solid/gas suspension heat exchanger (44) and/or the second solid/gas suspension exchanger (46) of the first circuit (2) comprise at least one separator, in particular a cyclone, the at least one separator comprising an inlet (44.1, 46.1), an outlet (44.2, 46.2) and a return passage (44.3, 46.3) for collecting the separated particles (6).

8. Device according to any of the preceding claims, wherein the solid/gas suspension heat exchanger (24) of the cooling section (22) of the second circuit (12) and/or the solid/gas suspension exchanger (34) of the heating section (32) of the second circuit (12) comprise at least one separator, in particular an inertial separator, preferably a cyclone, the at least one separator comprising an inlet (24.1, 34.1), an outlet (24.2, 34.2) and a return passage (24.3, 34.4) for collecting the separated particles (16, 6).

9. Device according to any of the preceding claims, comprising a condenser (50) to separate at least one constituent, in particular water from the first entraining gas (4), said condenser (50) being positioned in the first circuit (2) downstream of the reactor (8).

10. Device according to any of the preceding claims, wherein the first circuit (2) comprises a recycling passage (90) for recycling at least a portion of the first entraining gas (4) from a position downstream from the pre-heating section (32) or the condenser (50) to a position upstream of the reactor (8).

11. Device according to any of the preceding claims, wherein the second circuit (12) comprises a heat-recovery element (60), preferably said heat-recovery element being configured to exchange the heat accumulated in the second entraining gas (14) to the first entraining gas (4) at a section of the first circuit (2), more preferably said heat-recovery system (60) being a heat exchanger (60) positioned between the first (2) circuit and the second (12) circuit.

12. Device according to any of the preceding claims, wherein the reactor (8) comprises at least one of the following elements: electric heater, oxy-burner, an indirect calciner such as solid heat-carrier reactor, an externally-fired calciner (84), or electrically-heated calciner, or a combination thereof.

13. Device according to any of the preceding claims, wherein the reactor (8) comprises a fluidized bed reactor, an entraining bed reactor, a circulated fluidized bed or any combination thereof.

14. Device according to any of the preceding claims, wherein the externally-fired calciner (84) comprises an intake passage (110), said passage (110) being connected to the second circuit (12), preferably downstream from the heating section (32).

15. Device according to any of the preceding claims, for carrying out a process for the decarbonation of limestone, dolomite or other carbonated materials, said process comprising the following steps:
- heating particles of carbonated materials (6) in a reactor (8) of a first circuit (2) up to a temperature range in which carbon dioxide of the carbonated materials is released to obtain decarbonated particles (16) comprising CaO and/or MgO;
- conveying particles of carbonated materials (6) by a first entraining gas (4) in the first circuit (2) for preheating said carbonated materials (6), said entraining gas (4) comprising said carbon dioxide, said gas composition being substantially free of nitrogen;
- separating, preferably inertially separating, the carbonated particles (6) from a first entraining gas (4) flow;
- transferring the decarbonated particles (16) to a cooling section (22) of a second circuit (12) comprising a second entraining gas (14) in which the conveyed decarbonated particles (16) release a portion of their thermal energy;
- separating, preferably inertially separating, the decarbonated particles (16) from a second entraining gas (14) flow;
wherein said second entraining gas (14) is substantially free of carbon dioxide, and wherein the first (2) and second circuits (12) are separated by selective separation means (20, 21) allowing the passage of solids while substantially preventing the passage of the entraining gases (4, 14).
